Europäisches Patentamt

European Patent Office

Office européen des brevets

(19)

(11) Veröffentlichungsnummer: **0 266 477**
**A2**

(12) **EUROPÄISCHE PATENTANMELDUNG**

(21) Anmeldenummer: **87102808.0**

(22) Anmeldetag: **27.02.87**

(51) Int. Cl.⁴: **G01L 3/12**

(30) Priorität: **03.11.86 DE 3637318**

(43) Veröffentlichungstag der Anmeldung:
**11.05.88 Patentblatt 88/19**

(84) Benannte Vertragsstaaten:
**AT BE CH DE ES FR GB IT LI LU NL SE**

(71) Anmelder: **Stabil Elektronik GmbH**
**Martinstrasse 39**
**D-7300 Esslingen(DE)**

(72) Erfinder: **Majic, Milivoj**
**Haubersbronnerstrasse 28**
**D-7068 Urbach(DE)**

(74) Vertreter: **Strasser, Wolfgang, Dipl.-Phys et al**
**Patentanwälte Strohschänk, Uri & Strasser**
**Innere Wiener Strasse 8**
**D-8000 München 80(DE)**

(54) **Vorrichtung zum Messen der lastabhängigen Verdrillung einer rotierenden Welle.**

(57) Um die lastabhängige Verdrillung einer rotierenden Welle (1) berührungsfrei messen zu können, sind an der Welle wenigstens zwei Markierungsgruppen (9, 9'), von denen jede wenigstens eine Markierung (10, 10') umfaßt, mit einem axialen Abstand so angebracht, daß sie sich mit der Welle mitdrehen und eine Verdrillung der Welle eine relative Winkelverschiebung zwischen den Markierungsgruppen bewirkt. Weiterhin ist eine sich mit der Welle nicht mitdrehende Sensoranordnung (6) vorgesehen, die die Markierungen berührungslos so abtastet, daß ihr Ausgangssignal eine Information über die jeweilige relative Winkellage der Markierungsgruppen zueinander enthält. Vorzugsweise ist jede der Markierungsgruppen auf einem Markierungsträger (3, 4) angeordnet, der auf der Welle so montiert ist, daß er sich mit ihr mitdreht.

FIG.1

## Vorrichtung zum Messen der lastabhängigen Verdrillung einer sich drehenden Welle

Die Erfindung betrifft eine Vorrichtung zum Messen der lastabhängigen Verdrillung einer sich drehenden Welle.

Solche aus dem Stand der Technik bekannten Vorrichtungen umfassen z.B. eine aus Dehnungsmeßstreifen aufgebaute Brücke, die auf der Welle so montiert sind, daß sie bei der aufgrund einer mechanischen Belastung auftretenden Verdrillung der Welle ebenfalls verdreht werden und somit ein elektrisches Signal abgeben, das als Maß für die momentane Torsion verwendet und nach einer entsprechenden Verstärkung weiterverarbeitet werden kann. Ein Nachteil dieser bekannten Anordnung besteht darin, daß deswegen, weil sich die Dehnungsmeßstreifen-Brücke mit der rotierenden Welle mitdreht, das von ihr erzeugte elektrische Signal nur über Schleifringe von der Welle abgegriffen und zu der feststehenden Verstärkungs-und Verarbeitungsschaltung weitergeleitet werden kann. Der Abgriff eines Meßsignals über Schleifringe ist aber äußerst problematisch, weil die aufeinander - schleifenden Flächen einer starken mechanischen Abnutzung unterliegen und der zwischen ihnen bestehende Übergangswiderstand starken Veränderungen unterworfen sein kann, was zu einer erheblichen Verschlechterung der Meßgenauigkeit führt.

Zur Vermeidung dieser Schwierigkeiten ist es aus dem Stand der Technik ebenfalls bekannt, eine Verdrillungsmessung dadurch durchzuführen, daß in die Welle induktiv eine Meßfrequenz eingekoppelt wird, deren Wert sich mit der Verdrillung der Welle ändert. Die geänderte Frequenz wird ebenfalls auf induktivem Weg ausgekoppelt und die zwischen diesen beiden Signalen auftretende Frequenzverschiebung dient als Maß für die momentane Verdrillung der rotierenden Welle. Dieses bekannte Meßverfahren kommt zwar ohne sich mechanisch abnutzende Schleifringe·aus, doch ist der für eine genaue Messung erforderliche apparative Aufwand außerordentlich groß.

Demgegenüber liegt der Erfindung die Aufgabe zugrunde, eine Vorrichtung der eingangs genannten Art zu schaffen, die es ermöglicht, auf einfache und kostengünstige Weise die lastabhängige Verdrillung einer rotierenden Welle berührungsfrei zu messen.

Zur Lösung dieser Aufgabe sieht die Erfindung die im Anspruch 1 zusammengefaßten Merkmale vor.

Gemäß der Erfindung sind an der sich drehenden Welle wenigstens zwei einen axialen Abstand aufweisende Markierungsgruppen vorgesehen, von denen jede wenigstens eine Markierung umfaßt und die entweder direkt auf der Welle selbst oder jeweils auf einem Markierungsträger angebracht sind. Im letzteren Fall sind die Markierungsträger dann ihrerseits so in einem axialen Abstand auf der Welle montiert, daß sie sich mit dieser mitdrehen. Bei einer unmittelbaren Anbringung auf der Welle können die Markierungen beispielsweise als sich parallel zur Längsachse der Welle erstreckende, - schmale Streifen ausgebildet sein. Im zweiten Fall sind die Markierungsträger vorzugsweise als in axialer Richtung flache Scheiben ausgebildet, auf denen die Markierungen in Form schmaler, in radialer Richtung von der Welle weg verlaufender Streifen angeordnet sind. Es sind aber auch andere Formen sowohl von Markierungsträgern als auch von Markierungen möglich. Wichtig ist, daß sich wegen des axialen Abstandes der wenigstens zwei Markierungsgruppen eine Torsion der Welle so auf die Markierungsgruppen überträgt, daß sie gegeneinander eine torsionabhängige Winkelverschiebung in Drehrichtung erfahren. Mit Hilfe einer zumindest in Drehrichtung feststehenden, d.h. die Drehung der Welle nicht mitmachenden Sensoranordnung werden die Markierungen der wenigstens zwei Gruppen dann berührungsfrei so abgetastet, daß ihre Winkelverschiebung aus dem Ausgangssignal der Sensoranordnung abgeleitet werden kann.

Bei den Markierungen kann es sich um Bereiche handeln, die sich z.B. hinsichtlich ihrer Magnetisierung oder vorzugsweise hinsichtlich ihrer optischen Eigenschaften von ihren Nachbarbereichen unterscheiden. Im ersten Fall werden sie ähnlich wie eine Magnetplatte oder dergleichen berührungsfrei mit Hilfe von Magnetköpfen abgetastet. Im zweiten Fall werden die Markierungen mit Hilfe einer oder mehrerer Lichtquellen beleuchtet und das von den Markierungen reflektierte bzw. durchgelassene Licht wird vermittels eines oder mehrerer Fotodetektoren empfangen, so daß auch hier eine berührungslose Messung gewährleistet ist. In jedem Fall entsteht das die Größe der Wellentorsion wiedergebende elektrische Signal als Ausgangssignal der sich nicht mitdrehenden Sensoranordnung und/oder einer ihr nachgeschalteten Auswerteeinheit ohne daß eine mechanische Berührung der rotierenden Welle oder von Teilen erforderlich ist, die sich mit der Welle mitdrehen.

Unabhängig davon, ob die Markierungen auf magnetischem oder optischem Wege abgetastet werden, kann für jede Markierungsgruppe eine eigene Sensoreinheit vorgesehen werden, deren Ausgangssignal jedes Mal dann eine Änderung erfährt, wenn eine Markierung aufgrund der Wellendrehung vorbeiläuft. Durch einen Phasenvergleich zwischen den Ausgangssignalen der wenigstens zwei Sensoreinheiten läßt sich dann ein elektrisches Signal erzeugen, das die relative Winkelverschiebung zwischen den wenigstens zwei Markierungsgruppen und damit die Torsion der Welle wiederspiegelt. Nimmt man z.B. an, daß auf jedem als flache Scheibe ausgebildeten Markierungsträger eine Vielzahl von radial nach außen verlaufenden streifenförmigen Markierungen vorgesehen ist, die in Drehrichtung in etwa gleichförmig voneinander beabstandet sind und alle in etwa die gleiche Breite besitzen, so erhält man am Ausgang einer diese Markierungen abtastenden Sensoreinheit eine in etwa periodische Folge von Impulsen oder sinusähnlichen Schwingungssignalen.

Sind auf der Welle genau zwei Markierungsträger befestigt, so kann auf einfache Weise die Phasenverschiebung zwischen den beiden sich so ergebenden periodischen Ausgangssignalen der zugehörigen Sensoreinheiten gemessen und hieraus die jeweilige momentane Torsion der Welle ermittelt werden.

Insbesondere bei der optischen Abtastung von Markierungen, die sich hinsichtlich ihrer optischen Eigenschaften von ihren Nachbarbereichen auf den Markierungsträgern unterscheiden, kann die Anordnung jedoch so getroffen werden, das die Winkelverschiebung zwischen den Markierungsträgern bereits im Abtastsignal vorhanden ist. Dadurch wird nur eine einzige Sensoreinheit benötigt, deren Ausgangssignal unmittelbar eine Information über die momentane Wellentorsion enthält.

Dies ist beispielsweise bei einer besonders bevorzugten Variante der erfindungsgemäßen Vorrichtung der Fall, bei der die Markierungen eine von ihren Nachbarbereichen auf den Markierungsträgern verschiedene Lichtdurchlässigkeit besitzen und eine Lichtquelle und ein Fotodetektor so angeordnet sind, daß ihre optische Verbindungslinie durch die beiden Markierungsträger hindurch in etwa parallel zu der sich drehenden Welle verläuft. Die beiden Markierungsträger sind als im wesentlichen identische flache Scheiben ausgebildet und auf der rotierenden Welle so befestigt, daß die Markierungen im unbelasteten Zustand der Welle,d.h. wenn keine Torsion vorhanden ist, in Richtung der Sichtlinie zwischen Lichtquelle und Fotodetektor miteinander fluchten. Nimmt man an, daß die Markierungen eine höhere Transparenz besitzen als die sie umgebenden Nachbarbereiche, so empfängt bei dieser Anordnung der Fotodetektor also Licht maximaler Helligkeit dann, wenn die Welle nicht tordiert ist. Wenn sich die Welle aufgrund einer am Abtriebsende auftretenden Last verwindet, so wird der näher am Abtriebsende liegende Markierungsträger gegen den anderen Markierungsträger verdreht, so daß sich die auf ihm angebrachten Markierungen winkelmäßig gegen die Markierungen am anderen Markierungsträger verschieben, wodurch sich die Helligkeit des vom Fotodetektor empfangenen Lichtes vermindert. Vorzugsweise kann die Breite der Markierungen und ihrer Zwischenräume so gewählt werden, daß bei maximaler Torsion der Welle die lichtundurchlässigen Zwischenräume des einen Markierungsträgers in Projektionsrichtung des von der Lichtquelle zum Fotodetektor gerichteten Lichtes die lichtdurchlässigen Markierungen des anderen Markierungsträgers gerade überdecken, so daß die Helligkeit des in diesem Zustand vom Fotodetektor empfangenen Lichtes einen minimalen Wert aufweist.

Bei einer weiteren Ausführungsform, bei der sich die Markierungen der Markierungsträger in optischer Hinsicht von ihren Nachbarbereichen unterscheiden, ist vorgesehen, daß das von der Lichtquelle ausgehende Licht durch die transparenten Markierungen des einen Markierungsträgers hindurch auf die reflektierenden Markierungen des anderen Markierungsträgers und von diesem zurück wieder durch die Markierungen des ersten Markierungsträgers hindurch auf einen Fotodetektor trifft, der auf der gleichen Seite der beiden Markierungsträger angeordnet ist wie die Lichtquelle. Bei einer weiteren Variante können Lichtquelle und Fotodetektor zwischen den beiden Markierungsträgern so angeordnet sein, daß das von der Lichtquelle ausgehende Licht auf die reflektierenden Markierungen des einen Markierungsträgers, von dort auf die reflektierenden Markierungen des zweiten Markierungsträgers und von diesem zurück zum Fotodetektor fällt. Auch bei diesen weiteren Ausführungsformen ist es vorteilhaft, die Markierungen als radial verlaufende Streifen auszubilden, deren Breite und Abstände so aufeinander abgestimmt sind, daß die Helligkeit des auf den Fotodetektor auftreffenden Lichtes im unbelasteten Zustand jeweils ein Maximum und bei maximaler Torsion jeweils ein Minimum aufweist.

Da die Torsion einer rotierenden, an einem Ende angetriebenen und am anderen Ende mit einer Last beaufschlagten Welle als Maß für das von der Welle übertragene Drehmoment verwendet werden kann, ist vorzugsweise vorgesehen, daß die erfindungsgemäße Vorrichtung zur Messung dieses Drehmomentes geeicht und verwendet wird.

Die Erfindung wird im folgenden anhand von Ausführungsbeispielen unter Bezugnahme auf die Zeichnung beschrieben; in dieser zeigt:

Fig. 1 eine erste Ausführungsform einer erfindungsgemäßen Vorrichtung, bei der die Sensoranordnung zur gemeinsamen Abtastung der beiden Markierungsträger aus einer Lichtquelle und einem Fotodetektor besteht, die in axialer Richtung voneinander beabstandet auf den beiden Außenseiten des zwischen den beiden Markierungsträgern vorhandenen Zwischenraums angeordnet sind,

Fig. 2a eine Ansicht der Anordnung aus Fig. 1 in Richtung der Pfeile II-II bei nichtverdrillter Welle,

Fig. 2b eine der Fig. 2a entsprechende Ansicht bei maximal verdrillter Welle,

Fig. 3 eine weitere Ausführungsform einer erfindungsgemäßen Vorrichtung, bei der die Sensoranordnung zur gemeinsamen Abtastung von zwei Markierungsträgern eine Lichtquelle und einen Fotodetektor umfaßt, die auf der gleichen Seite außerhalb des zwischen den Markierungsträgern vorhandenen Zwischenraums angeordnet sind,

Fig. 4 eine Ausführungsform der erfindungsgemäßen Vorrichtung, bei der die Sensoranordnung zur gemeinsamen Abtastung der beiden Markierungsträger aus einem Fotodetektor und einer Lichtquelle besteht, die innerhalb des zwischen den beiden Markierungsträgern vorhandenen Zwischenraums angeordnet sind,

Fig. 5 ein Signaldiagramm zur Erläuterung der Arbeitsweise der in den Fig. 1, 3 und 4 dargestellten Ausführungsformen,

Fig. 6 eine Ausführungsform der erfindungsgemäßen Vorrichtung, bei der die Sensoranordnung zwei voneinander getrennte Abtastköpfe umfaßt, von denen jeder einen Markierungsträger abtastet,

Fig. 7 eine Ausführungsform der erfindungsgemäßen Vorrichtung, bei der die Sensoranordnung zwei Abtastköpfe umfaßt, von denen jeder eine unmittelbar auf der Welle selbst angebrachte Markierungsgruppe abtastet, und

Fig. 8 ein Signaldiagramm zur Erläuterung der Arbeitsweise der Vorrichtungen aus Fig. 6 und 7.

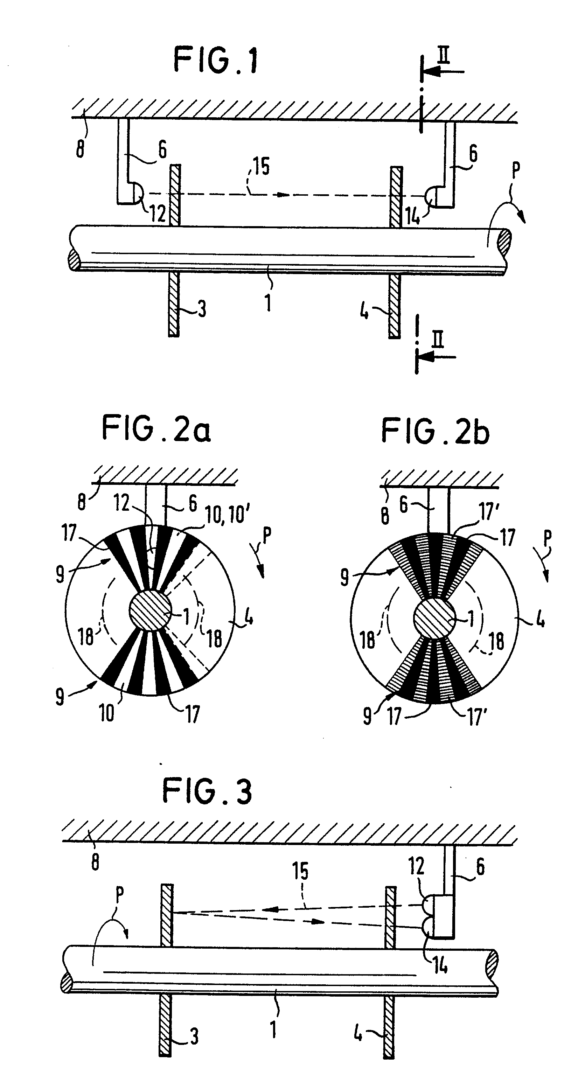

In den Fig. 1, 3, 4 und 6 ist jeweils eine in Richtung des Pfeils P rotierende Welle 1 dargestellt, auf der zwei als flache Kreisscheiben ausgebildete Markierungsträger 3, 4 konzentrisch zur Welle 1 mit einem axialen Abstand voneinander so montiert sind, daß sie sich mit der Welle 1 mitdrehen. Die feste Verbindung zwischen der Welle 1 und den Markierungsträgern 3, 4 kann z.B. durch eine nicht dargestellte Nut-Zapfen-Verbindung realisiert werden, die eine einfache, genaue und über lange Zeit hinweg konstante Justierung der Markierungsträger 3, 4 auf der Welle 1 ermöglicht. Weiterhin zeigt jede der genannten Figuren eine Sensoranordnung 6, die an einer sich mit der Welle 1 nicht mitdrehenden Halterung 8 montiert ist und dazu dient, auf den Markierungsträgern 3, 4 angebrachte Markierungsgruppen 9', 9 abzutasten, um aus den bei einer Verdrillung der Welle 1 zwischen der Markierungsgruppe 9' des Markierungsträgers 3 und der Markierungsgruppe 9 des Markierungsträgers 4 auftretenden Winkelverschiebung ein Signal abzuleiten, das als Maß für die Verdrillung der Welle 1 dient.

Die Unterschiede zwischen den in den Fig. 1, 3, 4 und 6 dargestellten Ausführungsformen der erfindungsgemäßen Vorrichtung bestehen im wesentlichen in einer unterschiedlichen Ausgestaltung und/oder Funktionsweise der Sensoranordnung 6, auf die im folgenden unter Bezugnahme auf diese Figuren noch genauer eingegangen wird.

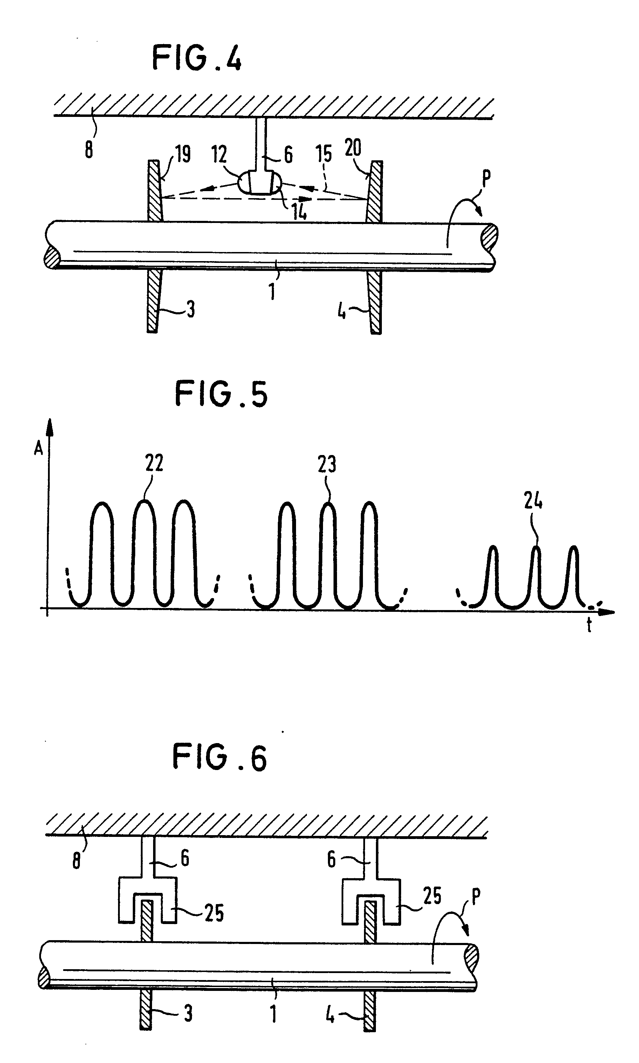

Bei der Ausführungsform gemäß Fig. 1 umfaßt die Sensoranordnung 6 eine Lichtquelle 12, die beispielsweise von einer Leuchtdiode gebildet werden kann, und einen Fotodetektor 14, die außerhalb des zwischen den beiden Markierungsträgern 3, 4 vorhandenen axialen Zwischenraums so angeordnet sind, daß die als gestrichelte Linie 15 dargestellte, diese beiden elektrooptischen Bauelemente miteinander verbindende Sichtlinie in etwa parallel zur Welle 1 durch die beiden Markierungsträger 3, 4 hindurchverläuft. Hier wie auch bei den Ausführungsbeispielen gemäß den Fig. 3 und 4 können nicht dargestellte Linsen vorgesehen sein, die das von der Lichtquelle 12 ausgehende Lichtbündel vor seinem Auftreffen auf die Markierungsträger 3, 4 parallelisieren und das so erzeugte parallele Lichtbündel vor seinem Auftreffen auf den Fotodetektor 14 auf dessen lichtempfindliche Fläche fokussieren. Die in den Fig. 1, 3 und 4 wiedergegebene gestrichelte Linie 15 stellt jeweils den Zentralstrahl dieses Lichtbündels dar.

Wie man insbesondere den Fig. 2a und 2b entnimmt, umfassen die Markierungsgruppen 9', 9 bei dem in Rede stehenden Ausführungsbeispiel jeweils eine Vielzahl von Markierungen 10', 10, die auf den beiden Markierungsträgern 3, 4 als in radialer Richtung verlaufende, schmale, trapezförmige transparente Streifen ausgebildet und durch ebenso geformte und in etwa die gleichen Abmessungen aufweisende lichtundurchlässige Nachbarbereiche 17 voneinander getrennt sind. In Fig. 2a sind der Einfachheit halber nur einige transparente Markierungen 10 mit den zugehörigen lichtundurchlässigen Nachbarbereichen 17 des in dieser Blickrichtung vorne liegenden Markierungsträgers 4 dargestellt. Durch die gestrichelten Linien 18 soll jedoch angedeutet werden, daß eine wesentlich größere Anzahl von Markierungen 10 und Nachbarbereichen 17 vorhanden und so angeordnet ist, daß in etwa die gesamte hier wiedergegebene Kreisfläche des Markierungsträgers 4 von ihnen gleichmäßig überdeckt ist.

Erfindungsgemäß sind bei diesem Ausführungsbeispiel die Markierungsträger 3 und 4 in identischer Weise ausgebildet und so auf der Welle 1 montiert, daß sie bei dem in Fig. 2a wiedergegebenen torsionsfreien Zustand der Welle 1 in Richtung der Sichtlinie zwischen der Lichtquelle 12 und dem Fotodetektor 14 genau miteinander fluchten. Da in Fig. 2a die Blickrichtung mit dieser Sichtlinie zusammenfällt, ist in dieser Figur der Markierungsträger 3 nicht zu sehen, da seine Markierungen 10' und deren Nachbarbereiche 17' genau hinter den Markierungen 10 und deren Nachbarbereichen 17 des Markierungsträgers 4 liegen. Dementsprechend ist in Fig. 2a durch die transparente Markierung 10 hindurch, die genau senkrecht nach oben weist, ein Teil der hinter dem hinteren Markierungsträger 3 liegenden Lichtquelle 12 sichtbar.

In Fig. 2b ist die Anordnung aus Fig. 1 mit der maximal auftretenden Verdrillung der Welle 1 wiedergegeben. Wie man sieht, ist die Breite sowohl der Markierungen 10 als auch ihrer Nachbarbereiche 17 so gewählt, daß durch die bei dieser Verdrillung auftretende Winkelverschiebung zwischen den beiden Markierungsträgern 3 und 4 durch die transparenten Markierungen des vorderen Markierungsträgers 4 hindurch nur noch die lichtundurchlässigen Nachbarbereiche 17' des hinteren Markierungsträgers 3 sichtbar sind, während die durchsichtigen Markierungen 10' des hinteren Markierungsträgers 3 durch die lichtundurchlässigen Nachbarbereiche 17 des vorderen Markierungs trägers 4 abgedeckt werden. Die lichtundurchlässigen Bereiche 17' des hinteren Markierungsträgers 3 sind in Fig. 2b nur der Deutlichkeit halber durch eine Schraffur gekennzeichnet. Tatsächlich sind sie genauso lichtundurchlässig wie die Bereiche 17' des vorderen Markierungsträgers 4. Bei dieser maximalen Verdrillung der Welle 1 wird also das von der Lichtquelle 12 ausgehende Lichtbündel vollständig unterbrochen, so daß das Ausgangssignal des Fotodetektors 14 einen Minimalwert annimmt. Zwischen diesem Zustand und dem in Fig. 2a gezeigten verdrillungsfreien Zustand, in welchem das Ausgangssignal des Fotodetektors 14 seinen Maximalwert annimmt, gibt es eine Vielzahl von Übergangszuständen, die jeweils zu einem anderen Wert des Ausgangssignals des Fotodetektors 14 führen, das somit als Maß für die Verdrillung der Welle 1 dienen kann.

Bei dem in Fig. 3 wiedergegebenen Ausführungsbeispiel sind die Lichtquelle 12 und der Fotodetektor 14 der Sensoreinheit 6 zu einer Baueinheit zusammengefaßt, die auf der in Fig. 3 rechten Seite außerhalb des zwischen den Markierungsträgern 3 und 4 vorhandenen Zwischenraums angeordnet ist. Der in Fig. 3 rechte Markierungsträger 4 ist genauso ausgebildet wie die unter Bezugnahme auf die Fig. 1 und 2 beschriebenen Markierungsträger und besitzt insbesondere die gleichen transparenten Markierungen 10, die durch lichtundurchlässige Nachbarbereiche 17 voneinander getrennt sind. Somit kann das von der Lichtquelle 12 ausgehende Licht durch die transparenten Markierungen 10 des Markierungsträgers 4 auf den in Fig. 3 linken Markierungsträger 3 fallen. Die auf der beleuchteten Seite dieses Markierungsträgers 3 angebrachten Markierungen 10' und die zwischen ihnen befindlichen Nachbarbereiche 17' besitzen zwar die gleiche Form und Größe wie die Markierungen 10 und die Nachbarbereiche 17 auf dem Markierungsträger 4, doch unterscheiden sich beim Markierungsträger 3 die Markierungen 10' durch ein hohes Licht-Reflexionsvermögen von ihren stark Licht absorbierenden Nachbarbereichen 17'. Das von den Mar kierungen 10' des linken Markierungsträgers 3 reflektierte Licht fällt durch die transparenten Markierungen 10 des rechten Markierungsträgers 4 zurück auf den Fotodetektor 14. Auch hier sind die beiden Markierungsträger 3 und 4 so angeordnet, daß das Ausgangssignal des Fotodetektors 14 im verdrillungsfreien Zustand der Welle 1 einen maximalen Wert und bei der maximal auftretenden Verdrillung der Welle 1 einen minimalen Wert annimmt.

Auch bei dem in Fig. 4 wiedergegebenen Ausführungsbeispiel sind die Lichtquelle 12 und der Fotodetektor 14 der Sensoranordnung 6 zu einer Baueinheit zusammengefaßt, die hier jedoch innerhalb des zwischen den Markierungsträgern 3 und 4 vorhandenen Zwischenraums angeordnet ist. Das von der Lichtquelle 12 ausgehende Lichtbündel ist in Fig. 4 etwas nach unten geneigt und fällt auf die innere Stirnfläche 19 des linken Markierungsträgers 3, die ebenso stark reflektierende Markierungen 10' und stark absorbierende Nachbarbereiche 17' aufweist, wie dies oben für den Markierungsträger 3 des Ausführungsbeispiels in Fig. 3 beschrieben wurde. Dabei ist die innere Stirnfläche 19 des Markierungsträgers so geneigt, daß das von den Markierungen 10' reflektierte Lichtbündel in etwa parallel zur Welle 1 auf die gegenüberliegende innere Stirnfläche 20 des in Fig. 4 rechten Markierungsträgers 4 geworfen wird, der auf dieser inneren Stirnfläche 20 ebenfalls stark reflektierende Markierungen 10 aufweist, die durch stark absorbierende Nachbarbereiche 17 voneinander getrennt sind. Auch die innere Stirnfläche 20 ist leicht geneigt, so daß das von den Markierungen 10 reflektierte Lichtbündel zum Fotodetektor 14 gelangt. Auch hier ist es möglich, die Form und Größe der Markierungen 10, 10' und ihrer Nachbarbereiche 17, 17' sowie die relative Lage der Markierungsträger 3, 4 so zu wählen, daß sich in der oben beschriebenen Weise im verdrillungsfreien Zustand der Welle 1 ein maximales Ausgangssignal und im maximal verdrillten Zustand der Welle 1 ein minimales Ausgangssignal des Fotodetektors 14 ergibt.

In Fig. 5 ist für drei verschiedene Verdrillungszustände der Welle 1 das Ausgangssignal des Fotodetektors 14 wiedergegeben, wie man es bei jeder der unter Bezugnahme auf die Fig. 1 bis 4 beschriebenen Ausführungsformen erhalten kann. Dabei ist über einer Zeitachse t die Amplitude A dieses Ausgangssignals ganz links für den verdrillungsfreien Zustand, in der Mitte für eine mittlere Verdrillung und ganz rechts für eine knapp unterhalb des Maximalwertes liegende Verdrillung wiedergegeben. Wie man der Fig. 5 entnimmt, erhält man für den verdrillungsfreien Zustand am Ausgang des Fotodetektors 14 ein nahezu impulsförmiges Signal 22, dessen Impulse in etwa die gleiche Breite besitzen wie die zwischen ihnen liegenden Zwischenräume.

Wird die Welle 1 geringfügig verdrillt, so tritt eine kleine Winkelverschiebung zwischen den Markierungen 10 des einen Markierungsträgers und den Markierungen 10' des anderen Markierungsträgers auf, wodurch zwar nicht die maximale Helligkeit des auf den Fotodetektor 14 treffenden Lichtes wohl aber die Länge der Zeitspannen vermindert wird, während derer diese maximale Helligkeit vorhanden ist. In Fig. 5 drückt sich dies darin aus, daß die das Signal 23 bildenden Impulse zwar in etwa dieselbe Amplitude wie die Impulse des Signals 22 aber eine wesentlich geringere Breite und somit größere Abstände als jene besitzen. Ein das Ausgangssignal des Fotodetektors 14 verarbeitender Gleichrichter, der als Teil der Meß- und Auswerteschaltung der Sensoranordnung vorgesehen sein kann, wird also im Fall des mittleren Signals 24 eine wesentlich geringere Ausgangsspannung liefern als im Fall des linken Signals 22.

Bei dem in Fig. 5 ganz rechts wiedergegebenen Signal 24 wird von einer Verdrillung der Welle 1 ausgegangen, die so stark ist, daß aufgrund einer entsprechend starken Winkelverschiebung zwischen den beiden Markierungsträgern 3 und 4 das zum Fotodetektor 14 gelangende Licht seinen Maximalwert nicht mehr erreichen kann. Demgemäß besitzt das Signal 24 eine wesentlich kleinere Amplitude als die Signal 22 und 23 und die Abstände der Impulse ist noch größer als beim Signal 23. Ein mit diesem Signal 24 beaufschlagter Gleichrichter wird also eine noch geringere Ausgangs-Gleichspannung liefern als beim Signal 23. Erreicht die Verdrillung der Welle 1 ihren Maximalwert so gelangt, wie oben beschrieben, kein Licht mehr zum Fotodetektor 14, der somit auch keine Ausgangsimpulse mehr liefert. Das Ausgangssignal eines dem Fotodetektor 14 nachgeschalteten Gleichrichters wird dann ebenfalls einen Minimalwert annehmen.

Bei dem in Fig. 6 wiedergegebenen Ausführungsbeispiel umfaßt die Sensoranordnung 6 zwei Abtastköpfe 25, von denen der eine den Markierungsträger 3 und der andere den Markierungsträger 4 abtastet. Prinzipiell können hier die Markierungsträger 3 und 4 ebenso ausgebildet sein, wie dies oben unter Bezugnahme auf die Fig. 1 beschrieben wurde. Jeder der Abtastköpfe 25 umfaßt dann eine eigene Lichtquelle und einen eigenen Fotodetektor. Statt dessen können in diesem Fall die Markierungen aber auch in Form von Streifen auf den Markierungsträgern 3 und 4 aufgebracht sein, die sich hinsichtlich ihrer magnetischen Eigenschaften von den dazwischenliegenden Nachbarbereichen unterscheiden. In diesem Fall weist dann jeder der Abtastköpfe 25 einen Magnetkopf auf, der das Vorbeilaufen der Markierungen registriert und für jede Markierung einen Ausgangsimpuls abgibt. In jedem Fall erzeugt jeder der beiden Abtastköpfe 25, 25 eine Signalfolge, deren Amplitude und Frequenz von der Verdrillung der Welle 1 unabhängig ist. Vielmehr ergibt sich hier eine von der Verdrillung der Welle 1 abhängige Phasenverschiebung zwischen den Ausgangssignalen der beiden Abtastköpfe 25, die mit Hilfe eines Phasenkomparators, der hier einen Teil der Meß- und Auswerteschaltung der Sensoranordnung bildet, erfaßt und in ein das Ausmaß der Verdrillung der Welle 1 wiedergebendes Signal umgesetzt werden kann.

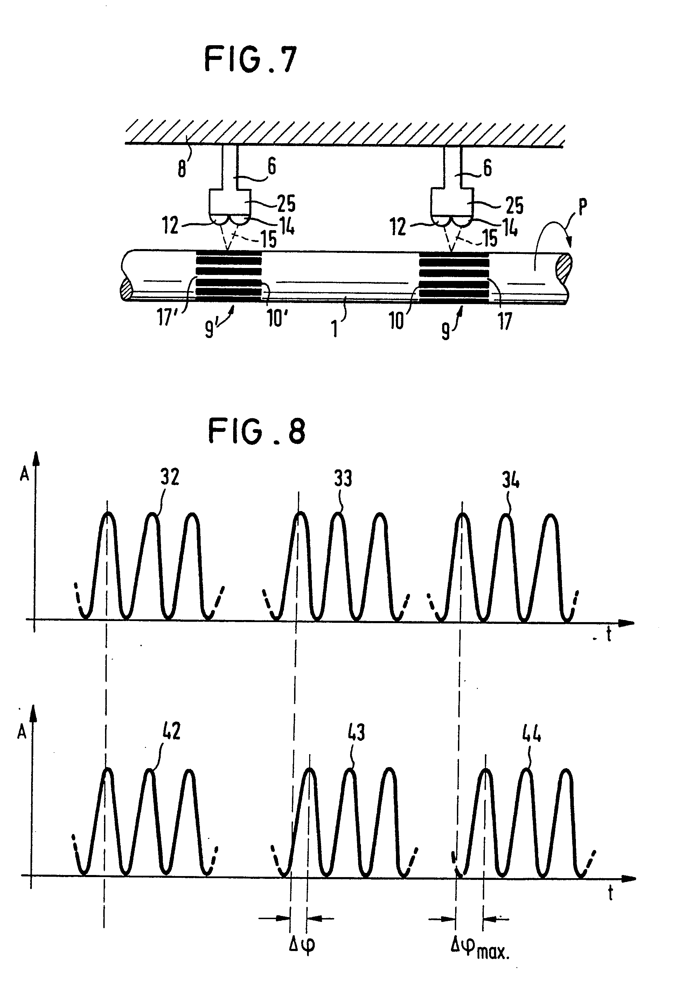

Letzteres gilt auch für die in Fig. 7 wiedergegebene Anordnung, bei der die beiden Markierungsgruppen 9', 9 mit einem gegenseitigen axialen Abstand unmittelbar auf die Oberfläche der Welle 1 aufgebracht sind, ohne daß hierzu spezielle Markierungsträger verwendet werden. Die Markierungen 10' bzw. 10 der Markierungsgruppen 9', 9 besitzen hier die Form von schmalen Streifen, die sich parallel zur Längsachse der Welle 1 erstrecken und in Umfangsrichtung der Welle voneinander beabstandet angeordnet sind. Die die Markierungen 10 bzw. 10' voneinander trennenden Nachbarbereiche 17, 17' besitzen in etwa die gleiche Form und Größe wie die Markierungen selbst und unterscheiden sich von diesen z.B. dadurch, daß sie ein anderes Licht-Reflexionsvermögen besitzen. Jede der beiden Markierungsgruppen 9', 9 wird durch einen Abtastkopf 25 abgetastet, von denen jeder eine Lichtquelle 12 zur Beleuchtung der Markierungen der zugehörigen Markierungsgruppe und einen Fotodetektor 14 zum Empfang des von der zugehörigen Markierungsgruppe reflektierten Lichtes umfaßt. Auch hier erzeugt jeder der Fotodetektoren 14 ein in etwa impulsförmiges Ausgangssignal, dessen Amplitude und Frequenz von der Verdrillung der Welle unabhängig sind. Ein Maß für diese Verdrillung liefert vielmehr die Phasenverschiebung, die zwischen den beiden Ausgangssignalen der beiden Fotodetektoren 14, 14 gemessen werden kann.

Dies wird im folgenden unter Bezugnahme auf Fig. 8 nochmals erläutert, in der die Ausgangssignale der Abtastköpfe 25 sowohl aus Fig. 6 als auch aus Fig. 7 für drei verschiedene Verdrillungszustände der Welle 1 dargestellt sind, wobei das obere Diagramm die Ausgangssignale des jeweils in der Fig. 6 bzw. 7 linken Abtastkopfes 25 und das untere Diagramm die Ausgangssignale des jeweils rechten Abtastkopfes 25 wiedergibt.

In beiden Fällen können die beiden Markierungsgruppen 9 und 9' in identischer Weise ausgebildet und so auf der Welle 1 angeordnet sein, daß sich für den verdrillungsfreien Zustand der Welle 1 zwischen den Ausgangssignalen 32 und 42 der beiden Abtastköpfe 25 keine Phasenverschiebung ergibt, wie dies in Fig. 8 ganz links dargestellt ist. Wird die Welle 1 demgegenüber geringfügig verdrillt, so bleiben zwar die Formen der Ausgangssignale der beiden Abtastköpfe 25 unverändert, doch ergibt sich eine zur Verdrillung der Welle 1 proportionale Phasenverschiebung $\Delta\phi$, wie dies in der Mitte der Fig. 8 für die Signale 33 und 43 dargestellt ist. Auch bei der in Fig. 8 ganz rechts durch die Signale 34 und 44 dargestellten maximalen Verdrillung der Welle 1 bleibt die Signalform unverändert und man erhält die maximale Phasenverschiebung $\Delta\phi_{max}$, die hier 180° beträgt.

In allen geschilderten Ausführungsbeispielen kann das Ausgangssignal der Sensoreinheit 6 auch als Maß für das von der Welle 1 übertragene Drehmoment verwendet werden.

**Ansprüche**

1. Vorrichtung zum Messen der lastabhängigen Verdrillung einer rotierenden Welle, dadurch **gekennzeichnet,** daß an der Welle (1) wenigstens zwei Markierungsgruppen (9, 9'), von denen jede wenigstens eine Markierung (10, 10') umfaßt, mit einem axialen Abstand so angebracht sind, daß sie sich mit der Welle (1) mitdrehen und eine Verdrillung der Welle (1) eine relative Winkelverschiebung zwischen den Markierungsgruppen (9, 9') bewirkt, und daß eine sich mit der Welle (1) nicht mitdrehende Sensoranordnung (6) vorgesehen ist, die die Markierungen (10, 10') berührungslos so abtastet, daß ihr Ausgangssignal eine Information über die jeweilige relative Winkellage der Markierungsgruppen (9, 9') zueinander enthält.

2. Vorrichtung nach Anspruch 1, dadurch **gekennzeichnet,** daß jede der Markierungsgruppen (9', 9) auf einem Markierungsträger (3, 4) angeordnet ist, der auf der Welle (1) so montiert ist, daß er sich mit der Welle (1) mitdreht.

3. Vorrichtung nach Anspruch 1, dadurch **gekennzeichnet,** daß die Markierungsträger (3, 4) in axialer Richtung flache Scheiben sind, auf deren Stirnflächen sich die Markierungen (10', 10) in Form radial verlaufender Streifen erstrecken.

4. Vorrichtung nach Anspruch 1, dadurch **gekennzeichnet,** daß die Markierungsgruppen (9, 9') unmittelbar auf der Welle (1) angebracht sind.

5. Vorrichtung nach einem der Ansprüche 1 bis 4, dadurch **kennzeichnet,** daß sich die Markierungen (10', 10) hinsichtlich ihrer optischen Eigenschaften von ihren Nachbarbereichen (17', 17) auf den Markierungsträgern (3, 4) unterscheiden und daß die Sensoranordnung (6) wenigstens eine Lichtquelle (12) zum Beleuchten der Markierungen (10', 10), wenigstens einen Fotodetektor (14) zum Empfangen des von den Markierungen (10', 10) modulierten Lichtes der Lichtquelle (12) und eine Meß-und Auswerteschaltung zur Messung und Auswertung des vom Fotodetektor (14) erzeugten Ausgangssignals umfaßt.

6. Vorrichtung nach einem der Ansprüche 2, 3 oder 5, dadurch **gekennzeichnet,** daß die Sensoranordnung (6) eine einzige Lichtquelle (12) und einen einzigen Fotodetektor (14) umfaßt, die die Markierungen (10', 10) aller Markierungsträger (3, 4) gemeinsam abtasten.

7. Vorrichtung nach Anspruch 6, dadurch **gekennzeichnet,** daß sich die Markierungen (10', 10) hinsichtlich ihrer Lichtdurchlässigkeit von ihren Nachbarbereichen (17', 17) unterscheiden und daß die Lichtquelle (12) in axialer Richtung außerhalb des zwischen den Markierungsträgern (3, 4) liegenden Zwischenraums auf der einen Seite der Markierungsträgeranordnung und der Fotodetektor (14) in axialer Richtung außerhalb des zwischen den Markierungsträgern (3, 4) liegenden Zwischenraums auf der anderen Seite der Markierungsträgeranordnung angeordnet ist (Fig. 1).

8. Vorrichtung nach Anspruch 6, dadurch **gekennzeichnet,** daß sich die Markierungen (10) auf dem einen Markierungsträger (4) hinsichtlich ihrer Lichtdurchlässigkeit und die Markieringen (10') auf dem anderen Markierungsträger (3) hinsichtlich ihres Licht-Reflexionsvermögens von den jeweiligen Nachbarbereichen (17, 17') unterscheiden und daß die Lichtquelle (12) und der Fotodetektor (14) in axialer Richtung außerhalb des zwischen den Markierungsträgern (3, 4) liegenden Zwischenraums auf derselben Seite neben dem Markierungsträger (4) angeordnet sind, der die Markierungen (10) aufweist, die sich von ihren Nachbarbereichen (17) durch ihre Lichtdurchlässigkeit unterscheiden (Fig. 3).

9. Vorrichtung nach Anspruch 6, dadurch **gekennzeichnet,** daß die Markierungen (10', 10) auf beiden Markierungsträgern (3, 4) sich hinsichtlich ihres Licht-Reflexionsvermögens von ihren Nachbarbereichen (17', 17) unterscheiden und daß die Lichtquelle (12) und der Fotodetektor (14) so in axialer Richtung im Zwischenraum zwischen den beiden Markierungsträgern (3, 4) angeordnet sind, daß die Lichtquelle (12) die die Markierungen (10') tragende Innenfläche (19) des einen Markierungsträgers (3) beleuchtet und der Fotodetektor (14) das von der die Markierungen (10) tragenden Innenfläche (20) des anderen Markierungsträgers (4) reflektierte Licht empfängt (Fig. 4).

10. Vorrichtung nach einem der Ansprüche 1 bis 5, dadurch **gekennzeichnet,** daß die Sensoranordnung wenigstens zwei axial voneinander beabstandete Abtastköpfe (25, 25) umfaßt, die jeweils die Markierungen (10', 10) der zugehörigen Markierungsgruppe (9', 9) abtasten und daß die Sensoranordnung (6) eine die gegenseitige Phasenlage der Ausgangssignale der Abtastköpfe (25, 25) messende und auswertende Schaltungsanordnung umfaßt (Fig. 6 und 7).

11. Vorrichtung nach einem der vorhergehenden Ansprüche, dadurch **gekennzeichnet,** daß jede Markierungsgruppe (9, 9') eine Vielzahl von Markierungen (10, 10') umfaßt, die in Drehrichtung in etwa gleichmäßig voneinander beabstandet angeordnet sind.

12. Vorrichtung nach einem der vorhergehenden Ansprüche, dadurch **gekennzeichnet,** daß die Markierungen (10, 10') der Markierungsgruppen (9, 9') im unbelasteten Zustand der Welle (1) in axialer Richtung gesehen miteinander fluchten.

13. Vorrichtung nach einem der vorhergehenden Ansprüche, dadurch **gekennzeichnet,** das die Breite der Markierungen (10', 10) so gewählt ist, daß bei maximaler Verdrillung der Welle (1) die Markierungen (10' oder 10) der einen Markierungsgruppe (9' oder 9) in axialer Richtung gesehen mit den Nachbarbereichen (17 oder 17') der Markierungen (10 oder 10') der anderen Markierungsgruppe (9 oder 9') fluchten.

14. Verwendung der Vorrichtung nach einem der vorhergehenden Ansprüche zur Messung des von der rotierenden Welle (1) übertragenen Drehmomentes.

## FIG.1

## FIG.2a

## FIG.2b

## FIG.3

# FIG.4

# FIG.5

# FIG.6

# FIG.7

# FIG.8